# EUROPÄISCHE PATENTSCHRIFT

(11) **EP 0 815 719 B1**
(45) Veröffentlichungstag und Bekanntmachung des Hinweises auf die Patenterteilung: **11.07.2001**
(21) Anmeldenummer: 97109981.7
(22) Anmeldetag: 19.06.1997
(51) Int. Cl.: A01F 15/07

(54) **Rundballenpresse**
Roundbaler
Presse à balles rondes

(30) Priorität: 02.07.1996 DE 19626525
(43) Veröffentlichungstag der Anmeldung: 07.01.1998
(73) Patentinhaber: Maschinenfabrik Bernard Krone GmbH, 48480 Spelle (DE)
(72) Erfinder: Krone, Bernard, 48480 Spelle (DE); Ahler, Wilhelm, 48703 Stadtlohn (DE)

(56) Entgegenhaltungen:
- DE-A- 3 418 681
- DE-U- 8 324 503
- DE-U- 29 609 555
- US-A- 4 938 004
- US-A- 5 433 059

## Beschreibung

Die Erfindung bezieht sich auf eine Rundballenpresse zur Herstellung von zylindrischen Ballen aus Heu, Stroh, angewelktem Grüngut oder dgl. landwirtschaftlichen Erntegüter nach Anspruch 1. Nach der Fertigstellung werden die Ballen mit einer Hüllbahn, insbesondere mit einer Netzbahn eingewickelt und dadurch zum einen gegen Auseinanderfallen und zum anderen bis zu einem gewissen Grad gegen Witterungseinflüsse geschützt. Zum Abziehen eines Abschnittes einer Hüllbahn von einer Materialrolle und zur Zuführung des Abschnittes der Hüllbahn in den Wickelraum weist die Rundballenpresse eine Umwickelungseinrichtung auf, der eine Messerbaugruppe zum Durchtrennen des Wickelmaterials zugeordnet ist.

In der EP 0 293 025 B1 ist eine Umwickelungseinrichtung zur selektiven Einleitung von Wickelmaterial in den Wikkelraum einer Rundballenpresse beschrieben, bei der zum Antrieb der Umwickelungseinrichtung eine als Riementrieb ausgeführte Antriebseinrichtung verwendet wird. Diese Antriebseinrichtung verfügt über eine Antriebskupplungseinrichtung, wie beispielsweise eine an einem Spannhebel aufgehängte Spannriemenscheibe und eine Verbindungsgestängeeinrichtung, durch die eine gleichzeitige Betätigung der Spannriemenscheibe des Riementriebes und der Messerbaugruppe der Umwickelungseinrichtung ermöglicht wird. Die Verbindungsgestängeeinrichtungen sind dabei so ausgeführt, daß diese eine sogenannte Totgangeinrichtung beinhalten, mit der eine begrenzte Bewegung der Spannriemenscheibe möglich ist, ohne daß eine Bewegung der Messerbaugruppe der Umwickelungseinrichtung hervorgerufen wird. Diese Bewegungsfolge während des Wickelvorganges tritt dann ein, wenn nach dem Einführvorgang des Wickelmaterials in den Wickelraum der sich drehende Ballen das Wickelmaterial erfaßt hat und nun durch die Drehung des Ballens das Wickelmaterial von der Vorratsrolle abgezogen wird. Dann ist es nämlich erforderlich, durch eine begrenzte Bewegung der Spannriemenscheibe den Riemenantrieb der Umwickelungseinrichtung abzuschalten, ohne daß eine Bewegung der Messerbaugruppe der Umwickelungseinrichtung stattfindet. Dazu ist ein zur Betätigung vorgesehenes Stellglied, das hinsichtlich der Länge in verschiedene Schaltstellungen bringbar ist, in eine zwischen einer Anfangstellung und einer Endstellung gelegenen Zwischenstellung zu überführen, in der die Spannriemenscheibe soweit zurück geschwenkt ist, daß ein Antrieb der Umwikkelungseinrichtung durch den Riementrieb nicht mehr erfolgt, die Messerbaugruppe aber noch nicht in eine Schneidstellung bewegt worden ist. Die vorstehend beschriebene Anordnung stellt eine aufwendige und somit teure Lösung dar, bei der außerdem durch ein mehr oder weniger genaues Anfahren der Zwischenstellung des Stellgliedes eine zufriedenstellende Arbeit der Rundballenpresse beeinträchtigt werden kann. So kann beispielsweise durch ein unvollständiges Entspannen des Riementriebes eine erhöhte Riemenabnutzung auftreten. Wird jedoch die Spannriemenscheibe zu weit bewegt, so ergibt sich daraus ein vorzeitiges Abtrennen der Wickelmaterialbahn und damit eine unvollständige Umwickelung des fertigen Ballens.

Aus der DE 36 01 361 C2 ist nun eine Rollballenpresse mit umfangsseitigen Wickelelementen bekannt, bei der zum Zwecke der Formfixierung eines fertigen Rundballens eine entsprechende Bahnlänge einer Netzgewebebahn von einer Vorratsrolle abgezogen wird. Die auf der Vorratsrolle aufgerollte Netzgewebebahn ist derart ausgebildet, daß sie in bestimmten Abständen mit vollflächigem wasserundurchlässigem Material beschichtet ist. Diese wasserundurchlässige Beschichtung soll einen fertig gewickelten Rundballen auf etwa seiner halben Umfangsfläche vor dem Eindringen von Feuchtigkeit wie beispielsweise Niederschlag schützen. Voraussetzung für ein derartiges Aufbringen von einem kombinierten Netz-Folienmaterial ist, daß der Rundballen immer gleich groß ist und die Netz-Folienbahn muß im Rand- oder Kantenbereich Mittel aufweisen, die beispielsweise über eine Tasteranordnung in Form einer Fotozellenanordnung mit Sender und Empfänger ermittelbar sind. Die um den Rundballen gewickelte Länge der Netz-Folienbahn wird nicht über die Umwickelungseinrichtung bestimmt, sondern vom Hersteller des Netz-Folienmaterials. Die vorgegebene auf der Vorratsrolle bereits markierte Länge wird nur noch von der Umwickelungseinrichtung eingelesen. Weitere Offenbarungen zur Wirkungsweise des Antriebes der Umwickelungseinrichtung sind der DE 36 01 361 C2 nicht zu entnehmen. Für einen speziellen Fall mag sich eine Rollballenpresse mit den aufgeführten Merkmalen einsetzen lassen, für den allgemeinen Gebrauch werden jedoch Netz- oder Folienmaterialien zum Umwickeln von Rundballen in Rundballenpressen eingesetzt, die als herkömmliche Bahnware auf Vorratsrollen aufgerollt und dementsprechend kostengünstig sind. Ferner kommen in der Praxis immer häufiger Rollballenpressen mit variablem Wickelraum für unterschiedlich große Rundballen zum Einsatz. Bei diesen Rollballenpressen kann nur mit einer Umwickelungseinrichtung gearbeitet werden, die den Umfang des Rundballens in der Rollballenpresse direkt ermittelt und darüber die Netz- oder Folienlänge für den Rundballen bestimmt. Auch wenn mehrere Vorratsrollen, was allein schon wegen des Platzbedarfes unvorstellbar ist, mit kombiniertem Netz-Folienmaterial vorhanden wären, ließe sich eine Rollballenpresse mit variablem Wikkelraum nicht wirtschaftlich einsetzen, da immer wieder die Netzrolle dem Umfang des Rollballens angepaßt werden müßte.

Aufgabe der Erfindung ist es daher, eine Rundballenpresse der vorstehend genannten Art zu schaffen, die eine funktionell einfach aufgebaute und damit kostengünstige Antriebs- und Schaltungsanordnung für eine Abzugs- und Zuführvorrichtung zum Abziehen eines Abschnittes einer Hüllbahn von einer Materialrolle und zum Zuführen des Hüllbahnabschnittes in den Wickelraum beinhaltet und bei der die zum Betrieb der Abzugs- und Zuführvorrichtung erforderlichen Bedien- und Einstelltätigkeiten auf ein Minimum beschränkt und derartig gestaltet sind, daß Bedienungsfehler bzw. daraus entstehender Verschleiß oder Schäden vermieden werden.

Zur Lösung der gestellten Aufgabe zeichnet sich die Rundballenpresse der eingangs genannten Art durch die im Anspruch 1 angegebenen Merkmale aus. Hinsichtlich der weiteren Ausgestaltung der Erfindung wird auf die Ansprüche 2 bis 16 verwiesen.

Bei einer gattungsgemäßen Rundballenpresse wird ein Ballen nach seiner Fertigstellung mit einem Abschnitt einer Hüllbahn, vorzugsweise einer Netzbahn umwickelt, die von einer abbremsbaren Materialrolle abgezogen wird. Die Einleitung dieses Vorganges erfolgt über eine Abzugs- und Zuführvorrichtung, mit der der von der Materialrolle abgezogene Hüllbahnabschnitt durch eine Gutzuführöffnung einem Wickelraum der Rundballenpresse zugeführt wird, bis der Hüllbahnabschnitt von dem sich drehenden Ballen erfaßt wird. Von nun an wird die Hüllbahn von dem sich drehenden Ballen von der Materialrolle abgezogen. Nachdem ein beliebiger, von einer Bedienperson vorgewählter Umhüllungsgrad erreicht ist, wird die Hüllbahn von einer der Abzugs- und Zuführvorrichtung zugeordneten Schneideinrichtung abgeschnitten.

Gemäß der Erfindung ist es nun vorgesehen, über ein vorzugsweise elektrisch ansteuerbares Stellglied, das zur Betätigung der Abzugs- und Zuführvorrichtung hinsichtlich seiner Länge aus einer ganz eingefahrenen Stellung ohne etwaige Zwischenstellungen in eine ganz ausgefahrene Stellung und zurück überführbar ist, die während eines kompletten Umhüllungsvorganges eines Ballens sowie beim nachfolgenden Abtrennen der Hüllbahn notwendigen Bedienungs- und Steuerungsschritte auszuführen. Das bedeutet, daß beispielsweise durch das Ausfahren des Stellgliedes aus der ganz eingefahrenen in die ganz ausgefahrene Stellung eine Spannrolle eines Riementriebes zum Antrieb der Abzugs- und Zuführvorrichtung aus einer Ausgangslage in eine den Riemen des Riementriebes spannende Lage und hierbei eine Messerbaugruppe der Schneideinrichtung über ein auf einer Steuerkurve geführtes Führungs- und Steuerungselement aus einer die Ruhelage bildenden Schneidendstellung in eine mit einer Durchlaufbahn der Hüllbahn nicht in Eingriff stehende Schneidausgangsstellung überführ- und arretierbar ist. Nach einem beliebigen und durch Erkennungsmittel festgestellten Umhüllungsgrad des Ballens kann die Spannrolle dann durch ein Einfahren des Stellgliedes aus der ganz ausgefahrenen in die ganz eingefahrene Stellung aus der den Riemen des Riementriebes spannenden Lage zurück in die Ausgangslage und damit gekoppelt die Messerbaugruppe der Schneideinrichtung durch den Abwurf des Führungs- und Steuerungselementes von der Steuerkurve infolge einer schräg zur Lauf- und Führungsfläche der Steuerkurve angeordneten Abwurfkante aus der Schneidausgangsstellung in die Schneidendstellung überführt werden. Selbstverständlich ist es hierbei auch vorstellbar, den Bewegungsablauf bei dem Stellglied umzukehren, so daß zum Spannen des Riementriebes ein Einfahren und zum Entspannen des Riementriebes ein Ausfahren des Stellgliedes erforderlich ist.

In einer baulich einfachen und wenig störungsanfälligen Art und Weise erfolgt die Überführung der Messerbaugruppe der Schneideinrichtung aus der Schneidendstellung in die Schneidausgangsstellung durch ein während einer Schwenkbewegung der Steuerkurve aus einer Ausgangslage in eine Endlage auf der Lauf- und Führungsfläche der Steuerkurve geführtes Führungs- und Steuerungselement, wobei das Führungs- und Steuerungselement vorteilhafterweise als Tastarm ausgebildet ist, der bezüglich seiner Querausrichtung als biegsame Federlamelle ausgeführt und an seinem freien Ende mit einer Laufrolle versehen ist. Es ist jedoch auch möglich, dem Tastarm einen mit der Steuerkurve in Eingriff stehenden Gleitkörper zu zuordnen. Um die Messerbaugruppe der Schneideinrichtung beim Erreichen eines vorgewählten Umhüllungsgrades aus der Schneidausgangsstellung in die Schneidendstellung zu bringen, ist es erfindungsgemäß vorgesehen, durch den Abwurf des Führungs- und Steuerungselementes von der Lauf- und Führungsfläche der Steuerkurve während der Schwenkbewegung der Steuerkurve aus der Endlage zurück in die Ausgangslage die Messerbaugruppe der Schneideinrichtung schlagartig aus der Schneidausgangsstellung in die Schneidendstellung zu bewegen, so daß dadurch ein sauberes Durchtrennen der Hüllbahn erfolgt. Ausgenutzt wird dabei in vorteilhafter Weise die kinetische Energie der Messerbaugruppe in der Schneidausgangsstellung.

Zur Gewährleistung einer einfachen und somit kostengünstigen Bauform sind sowohl die an einem Spannarm angebrachte Spannrolle des Riementriebes als auch die Steuerkurve um eine gemeinsame Schwenkachse schwenkbar gelagert. Vorzugsweise kann diese Schwenkachse auch mit der Mittelachse einer Abzugswalze der Abzugs- und Zuführvorrichtung übereinstimmen. Um einen Abzug der Hüllbahn von der Materialrolle mit einer erhöhten, gegenüber der durch den Riementrieb erreichbaren Abzugsgeschwindigkeit zu ermöglichen, ist es weiterhin vorgesehen, die Verbindung zwischen der angetriebenen Riemenscheibe des Riementriebes und der Abzugswalze der Abzugs- und Zuführvorrichtung mit einer Freilaufkupplung auszurüsten. Dadurch kann die Zunahme der Abzugsgeschwindigkeit der Hüllbahn von der Materialrolle ausgeglichen werden, welche nach dem Zuführvorgang der Hüllbahn in den Wickelraum durch den dann einsetzenden weiteren Abzug der Hüllbahn durch den sich drehenden Ballen verursacht wird.

Um auch bei Längenänderung des Riemens immer eine ausreichende Riemenspannung zur Verfügung zu stellen, ist dem Stellglied einenends ein Federspeicher zugeordnet, so daß je nach Beanspruchung (Spannen des Riementriebes beim Aus- oder Einfahren) die für eine optimale Riemenspannung erforderliche Länge des Stellgliedes sich automatisch einstellt.

Zur Feststellung des jeweiligen Umhüllungsgrades des Ballens während des Wickelvorganges sind Erkennungsmittel vorgesehen, die der Abzugswalze der Abzugs- und Zuführvorrichtung zugeordnet sind. Diese können als Signalscheibe mit am Umfang gleichmäßig verteilten Aussparungen ausgeführt sein, wobei die Anzahl der Aussparungen/Zählimpulse von einem Zählelement erfaßt werden. Die Anzahl der Zählimpulse während eines Umhüllungsvorganges in Verbindung mit dem Ballendurchmesser geben Aufschluß über den jeweiligen Umhüllungsgrad des Ballens und können einer Bedien- und Steuerungseinheit zugeführt werden. Dort können die genannten Meßgrößen beispielweise als Auslösesignal zur Beendigung des Umhüllungsvorganges genutzt werden.

Eine detaillierte Beschreibung des Gegenstandes der Erfindung erfolgt nun anhand eines Ausführungsbeispieles. In den Zeichnungen ist im einzelnen dargestellt:
- Fig. 1: eine schematische Seitenansicht einer Rundballenpresse mit einer erfindungsgemäßen Antriebs- und Schaltungsanordnung zum selektiven Antrieb einer Abzugs- und Zuführvorrichtung;
- Fig.2: eine schematische, teilweise abgebrochene, perspektivische Darstellung der Antriebs- und Schaltungsanordnung in einer Phase, in der die Abzugs- und Zuführvorrichtung nicht angetrieben wird;
- Fig.3: eine schematische, teilweise abgebrochene, perspektivische Darstellung der Antriebs- und Schaltungsanordnung in einer Phase während des Umhüllungsvorganges;
- Fig.4: eine vergrößerte perspektivische Ansicht der in Fig.2 markierten und als Einzelheit X bezeichneten Messerbaugruppe der Schneideinrichtung in Schneidendstellung mit einer Blickrichtung gemäß Pfeil A;
- Fig.5: eine vergrößerte perspektivische Ansicht der in Fig.3 markierten und als Einzelheit Y bezeichneten Messerbaugruppe der Schneideinrichtung in Schneidausgangsstellung mit einer Blickrichtung gemäß Pfeil B;
- Fig.6: eine schematische, teilweise abgebrochene, perspektivische Darstellung der Innenseite einer in Fahrtrichtung rechten Seitenwand der Rundballenpresse mit einer daran angebrachten Abzugs- und Zuführvorrichtung in einer Blickrichtung aus einer Position seitlich links und hinter der Rundballenpresse;

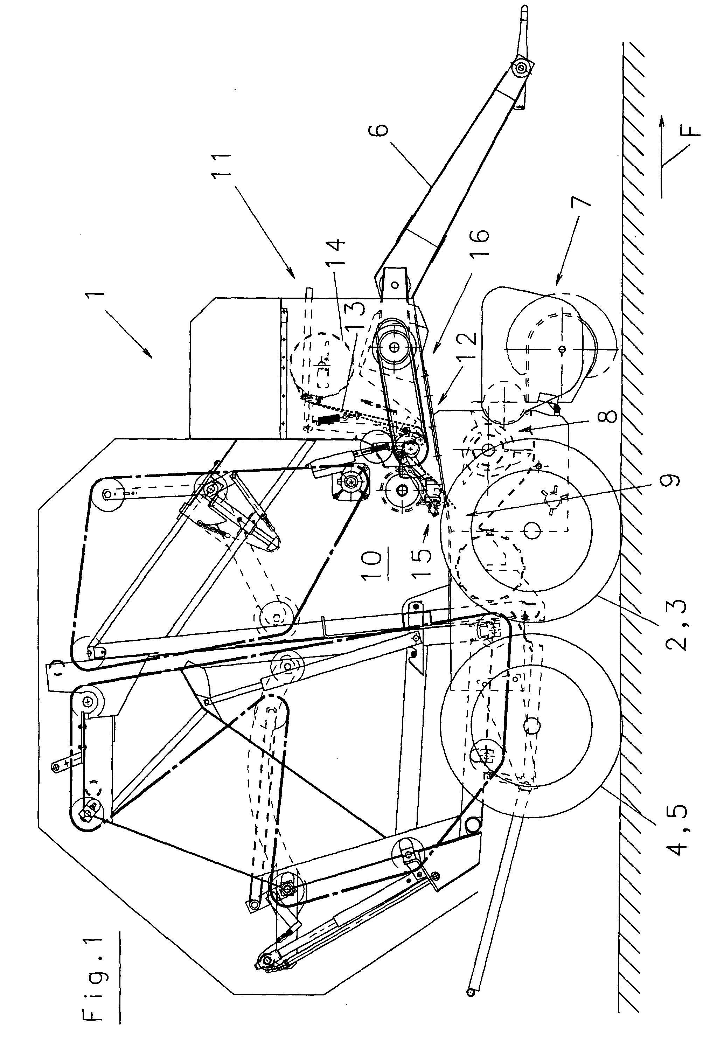

Die in Fig.1 veranschaulichte Rundballenpresse 1 zum Aufnehmen und Pressen von Heu, Stroh, angewelktem Gras oder dgl. landwirtschaftlichen Erntegut zu zylindrischen Ballen stützt sich über Laufräder 2,3 und 4,5 in Form einer Tandemachse gegenüber dem Erdboden ab und kann mittels einer Deichsel 6 an einen nicht dargestellten, landwirtschaftlichen Ackerschlepper oder dgl. Zugmaschine angehängt werden. Der Antrieb der Rundballenpresse 1 erfolgt über eine ebenfalls nicht dargestellte Gelenkwellenverbindung, die antriebsmäßig mit dem Ackerschlepper zu koppeln ist. Die Rundballenpresse 1 beinhaltet im wesentlichen eine Aufsammelvorrichtung 7 sowie eine dieser nachgeschalteten Förder-und Schneidvorrichtung 8 und einen eine Gutzuführöffnung 9 beinhaltenden und von Wickelelementen umfangseitig begrenzten Wikkelraum 10 zur Formung von zylindrischen Ballen mit unterschiedlichen Ballendurchmessern. Gleichermaßen ist es aber auch möglich, der Erfindung eine Rundballenpresse mit anderer Bauart zugrunde zu legen, insbesondere eine Rundballenpresse mit unveränderlicher Größe des Wickelraumes.

Wie weiterhin aus Fig.1 hervorgeht, weist die Rundballenpresse 1 eine Umhüllungsvorrichtung 11 auf, die eine Abzugs- und Zuführvorrichtung 12 zum Abziehen einer Hüllbahn 13 bestimmter Länge von einer Materialrolle 14 und zum Zuführen der Hüllbahn 13 in den Wickelraum 10 sowie eine der Abzugs- und Zuführvorrichtung 12 nachgeordneten Schneideinrichtung 15 umfaßt. Zum Antrieb und zur Betätigung der Abzugs- und Zuführvorrichtung 12 ist eine Antriebs- und Schaltungsanordnung 16 vorgesehen, welche im wesentlichen aus einem Riementrieb 17 mit einer antreibenden Riemenscheibe 18, einer angetriebenen Riemenscheibe 19 und dem Riemen 20, sowie aus einer an einem Spannarm 21 angebrachten und von einem Stellglied 23 zu betätigenden Spannrolle 22 besteht.

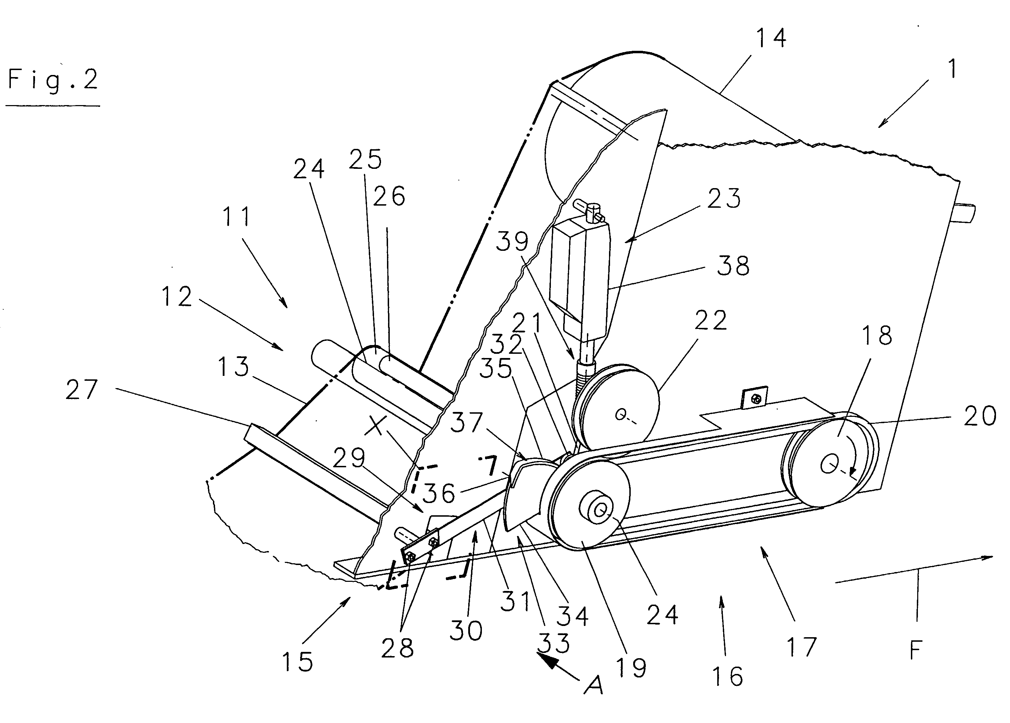

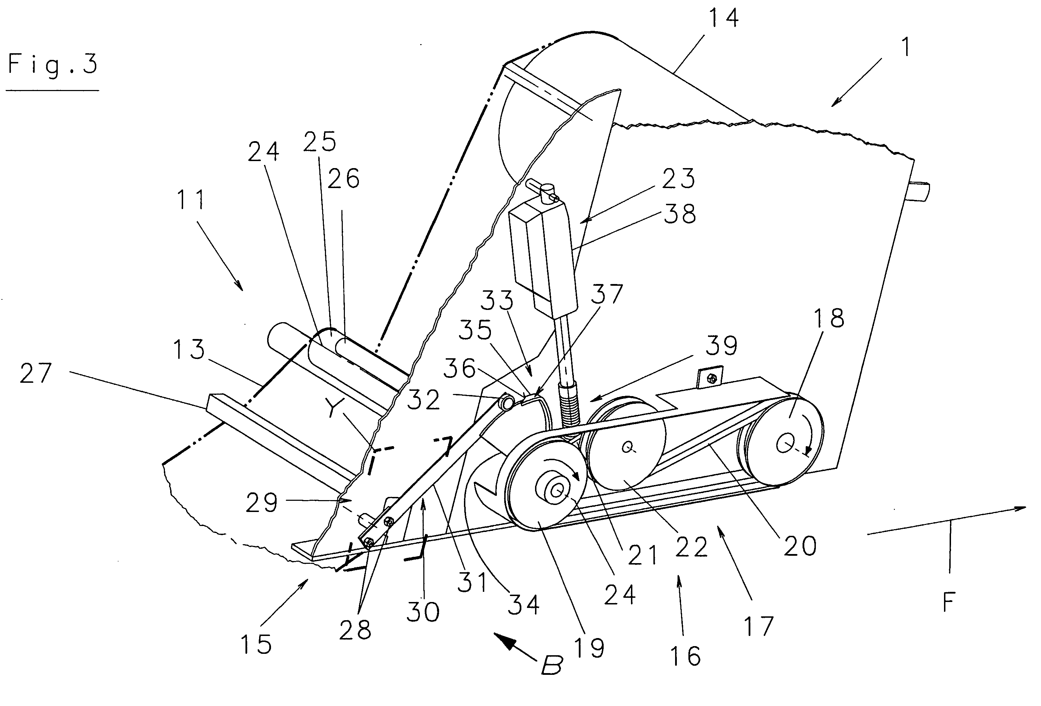

In den Figuren 2 und 3 ist die Antriebs- und Schaltungsanordnung 16 in den jeweiligen Schaltstellungen näher veranschaulicht. Wie aus diesen Figuren hervorgeht, umfaßt die Abzugs- und Zuführvorrichtung 12 eine sich quer zur Fahrtrichtung F der Rundballenpresse 1 erstrekkende und um die Mittelachse 24 drehbar gelagerte Abzugswalze 25 und eine oberhalb von dieser angeordneten Andruckrolle 26. Da die Verbindung zwischen der Riemenscheibe 19 des Riementriebes 17 und der Abzugswalze 25 eine Freilaufkupplung enthält, ist es möglich, die Abzugswalze 25 wahlweise von der Riemenscheibe 19 des Riementriebes 17 oder mit einer höheren Drehzahl von der durch den sich drehenden Ballen abgezogenen Hüllbahn 13 in eine Drehbewegung zu versetzen. Die der Abzugs- und Zuführvorrichtung 12 nachgeschaltete Schneideinrichtung 15 setzt sich aus einer Messerbaugruppe 27 sowie aus einem mittels Befestigungsschrauben 28 mit der Messerbaugruppe 27 verschraubten Führungs- und Steuerungselement 29 zusammen, welches seinerseits als Tastarm 30 ausgeführt ist. Der Tastarm besteht dabei aus einer bezüglich seiner Querausrichtung biegsamen Federlamelle 31, an dessen freiem Ende sich eine Laufrolle 32 befindet.

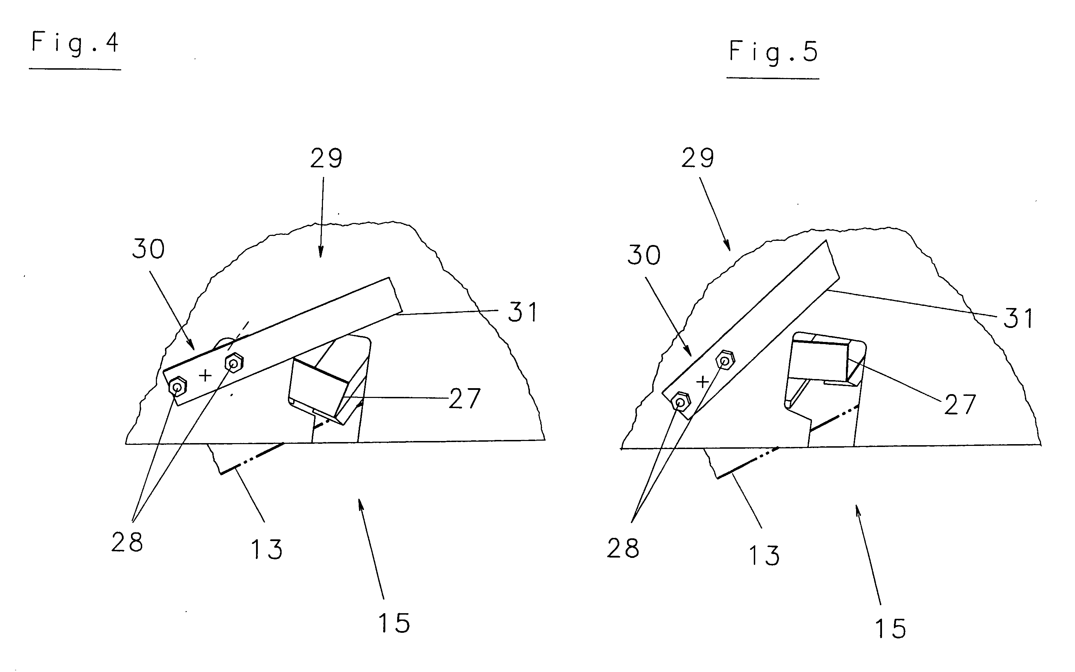

Zur Überführung der Messerbaugruppe 27 der Schneideinrichtung 15 aus einer die Ruhelage bildenden Schneidendstellung (Fig 4) in eine Schneidausgangsstellung (Fig.5) weist die Antriebs- und Schaltungsanordnung 16 eine Steuerkurve 33 auf, die um die Mittelachse 24 der Abzugswalze 25 drehbar gelagert ist. Die Steuerkurve 33 umfaßt dazu einen kurvenförmigen Steg 34 mit einem auf einem Teil der Außenkontur des Steges 34 angebrachten Abdeckelement 35. Zur Bildung einer Abwurfkante 36 ist das Abdeckelement 35 einenends schräg abgeschnitten, wobei die schräge Schnittkante so gewählt ist, daß die Schnittkante des Abdeckelementes 35 und der kurvenförmige Steg 34 einen spitzen Winkel einschließen. An der der Laufrolle 32 des Tastarmes 30 zugewandten Seite des Abdeckelementes 35 weist dieses eine Lauf- und Führungsfläche 37 auf, welche als Bewegungsbahn für die Laufrolle 32 dient.

In dem dargestellten Ausführungsbeispiel (Fig.2 und 3) ist das Stellglied 23 als Linearantriebsmotor 38 ausgebildet, der einenends mit einem Federspeicher 39 zur Konstanthaltung der Riemenspannung des Riementriebes 17 versehen ist. Durch den Federspeicher 39 an dem der Spannrolle 22 zugewandten Ende des Linearantriebsmotors 38 wird es ermöglicht, daß sich die zur Erreichung einer ausreichenden Riemenspannung des Riemens 20 erforderliche Länge des Linearantriebsmotors 38 selbsttätig einstellt.

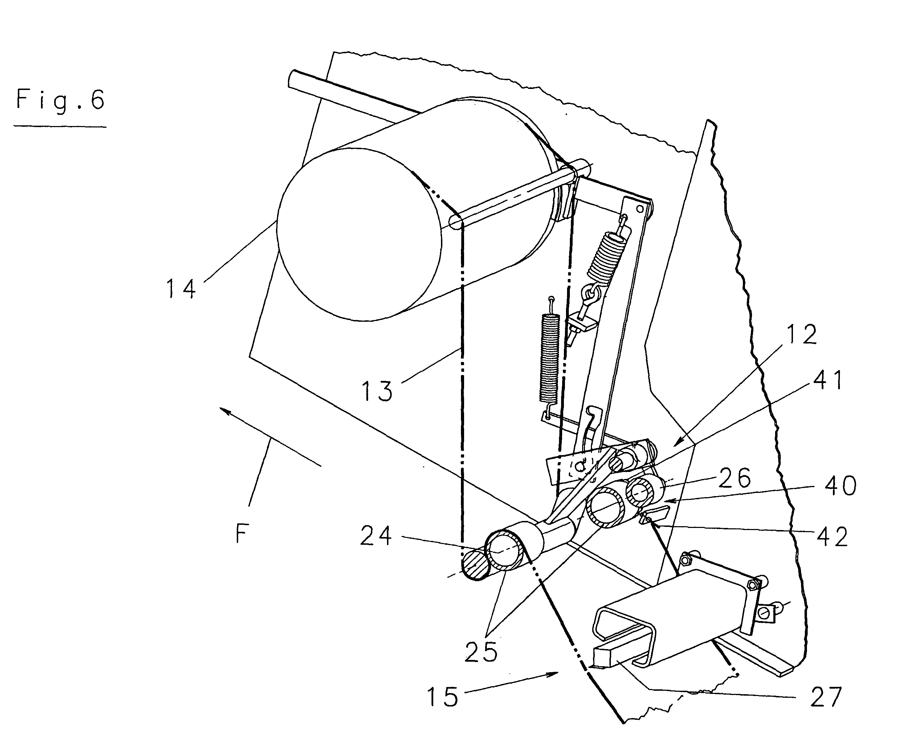

Zur Feststellung des jeweiligen Umhüllungsgrades des Ballens während des Umhüllungsvorganges sind Erkennungsmittel 40 vorgesehen, die der Abzugswalze 25 der Abzugs- und Zuführvorrichtung 12 zugeordnet sind (Fig.6). Diese können als Signalscheibe 41 mit am Umfang gleichmäßig verteilten Aussparungen ausgeführt sein, wobei die Anzahl der Aussparungen/Zählimpulse von einem Zählelement 42 erfaßt werden.

Die Betriebsweise der erfindungsgemäßen Rundballenpresse 1 stellt sich wie folgt dar:

Das von der Aufsammelvorrichtung 7 aufgenommene und über die Förder- und Schneidvorrichtung 8 dem Wickelraum 10 zugeführte Erntegut wird dort zu zylindrischen Ballen gepreßt und nachfolgend mit einem Abschnitt einer Hüllbahn 13 umfangseitig umhüllt. Zur Einleitung des Umhüllungsvorganges wird durch das vollständige Ausfahren des als elektrischer Linearantriebsmotor 38 ausgebildeten Stellgliedes 23, ausgelöst beispielsweise durch einen Tastendruck des Bedieners an einer Bedienund Steuerungseinheit der Rundballenpresse 1, aus der ganz eingefahrenen in die ganz ausgefahrene Stellung bewegt. Dadurch erfolgt eine Schwenkbewegung der Spannrolle 22 des Riementriebes 17 aus der Ausgangslage in die den Riemen 20 spannende Lage und damit gekoppelt eine Schwenkbewegung der Steuerkurve 33 aus der Ausgangslage (Fig.2) in die Endlage (Fig.3) zur Überführung der Messerbaugruppe 27 der Schneideinrichtung 15 aus der die Ruhelage bildenden Schneidendstellung (Fig.4) in die Schneidausgangsstellung (Fig.5). Dadurch wird die Abzugswalze 25 der Abzugs- und Zuführvorrichtung 12 in eine Drehbewegung versetzt und somit ein Abschnitt der Hüllbahn 13 dem Wickelraum 10 der Rundballenpresse 1 zugeführt.

Der Zuführvorgang der Hüllbahn 13 in den Wickelraum 10 dauert so lange an, bis die Hüllbahn 13 von dem sich drehenden Ballen erfaßt wird, so daß von nun an die Hüllbahn 13 von dem sich drehenden Ballen abgezogen wird. Da das Abziehen der Hüllbahn 13 durch den sich drehenden Ballen mit einer höheren Abzugsgeschwindigkeit erfolgt, kann dieser Zeitpunkt als eigentlicher Anfangszeitpunkt des Umhüllungsvorganges gewertet werden. Zu diesem Zeitpunkt beginnt auch eine Messung der Länge der abgezogenen Hüllbahn 13 zur Feststellung des Umhüllungsgrades des Ballens durch eine Zählung der Aussparungen/Zählimpulse der Signalscheibe 41 mittels des Zählelementes 42 (Fig.6). Die Anzahl der Zählimpulse können nun einer Bedien- und Steuerungseinheit zugeführt und dort beispielsweise als Auslösesignal zur Beendigung des Umhüllungsvorganges verwendet werden.

Nachdem Erreichen eines vorgewählten Umhüllungsgrades wird nun durch das Einfahren des elektrischen Linearantriebsmotors 38 aus der ganz ausgefahrenen in die ganz eingefahrene Stellung der Umhüllungsvorgang beendet. Dies kann einerseits durch eine sogenannte Handsteuerung eingeleitet werden oder andererseits als Folge einer Auswertung der Zählimpulse des Zählelementes 42 in Verbindung mit dem vorhandenen Ballendurchmesser automatisch ausgelöst werden. Dabei wird durch eine Schwenkbewegung der Spannrolle 22 der Riementrieb 17 entspannt und damit gekoppelt die Steuerkurve 33 aus der Endlage (Fig.3) in die Ausgangslage (Fig.2) zurückgeschwenkt. Dabei erfolgt durch den Abwurf der Laufrolle 32 des Tastarmes 30 durch die Abwurfkante 36 von Steuerkurve 33 eine schlagartige Überführung der Messerbaugruppe 27 aus der Schneidausgangsstellung (Fig.5) in die Schneidendstellung (Fig.4), so daß dadurch ein sauberes Durchtrennen der Hüllbahn 13 erreicht wird.

Obwohl in den Zeichnungen und in der Beschreibung eine bevorzugte Ausführungsform dargelegt wurde, sind durchaus weitere Modifikationen und Ausführungsvarianten vorstellbar. So ist es beispielsweise denkbar, dem Tastarm 30 einen Abwurfnocken zu zuordnen, über den dann durch den Abwurf der Laufrolle 32 des Tastarmes 30 von der Steuerkurve 33 ein Durchtrennen der Hüllbahn 13 bewirkt wird.

## Patentansprüche

1. Rundballenpresse mit den Wickelraum unter Belassung einer Gutzuführöffnung umfangseitig begrenzenden Wickelelementen und einer Abzugs- und Zuführvorrichtung (12) mit einer dieser zugeordneten Schneideinrichtung (15) zum Abziehen einer Hüllbahn (13) bestimmter Länge von einer Materialrolle (14) und zum Zuführen der Hüllbahn (13) in den Wickelraum der Rundballenpresse zwecks umfangsseitiger Umhüllung eines fertigen Ballens mit einer Antriebs- und Schaltungsanordnung zum selektiven Antrieb der Abzugs- und Zuführvorrichtung (12), wobei die Antriebs- und Schaltungsanordnung einen mittels einer Spannrolle (22) zu- und abschaltbaren Riementrieb (17) umfaßt und derart ausgebildet ist, daß synchron mit dem Zuschalten des Riementriebes (17) eine Überführung der Schneideinrichtung (15) aus einer die Ruhelage bildenden Schneidendstellung in eine Schneidausgangsstellung erfolgt und durch das Abschalten des Riementriebes (17) eine Überführung der Schneideinrichtung (15) aus der Schneidausgangsstellung in die Schneidendstellung erreicht wird und wobei mittels eines Stellgliedes (23) die Spannrolle (22) des Riementriebes (17) aus einer Ausgangslage in eine den Riemen (20) des Riementriebes (17) spannende Lage und hierbei eine Messerbaugruppe (27) der Schneideinrichtung (15) über ein auf einer Steuerkurve (33) geführtes Führungs- und Steuerungselement (29) aus der die Ruhelage bildenden Schneidendstellung in eine mit einer Durchlaufbahn der Hüllbahn (13) nicht in Eingriff stehende Schneidausgangsstellung überführ- und arretierbar ist und daß nach einem beliebigen und durch Erkennungsmittel (40) festgestellten Umhüllungsgrad des Ballens die Spannrolle (22) aus der den Riemen (20) des Riementriebes (17) spannenden Lage zurück in die Ausgangslage und damit gekoppelt die Messerbaugruppe (27) der Schneideinrichtung (15) schlagartig durch den Abwurf des Führungs- und Steuerungselementes (29) von der Steuerkurve (33) infolge einer schräg zur Lauf- und Führungsfläche (37) der Steuerkurve (33) angeordneten Abwurfkante (36) aus der Schneidausgangsstellung in die Schneidendstellung bringbar ist.

2. Rundballenpresse nach Anspruch 1, dadurch gekennzeichnet, daß das Führungs- und Steuerungselement (29) als ein mit der Messerbaugruppe (27) der Schneideinrichtung (15) verbundener Tastarm (30) ausgeführt ist, an dessen freiem Ende eine Laufrolle (32) oder ein Gleitkörper angeordnet sein kann.

3. Rundballenpresse nach Anspruch 1 und 2, dadurch gekennzeichnet, daß der Tastarm (30) als eine bezüglich seiner Querausrichtung biegsame Federlamelle (31) ausgebildet ist.

4. Rundballenpresse nach einem der Ansprüche 1 bis 3, dadurch gekennzeichnet, daß die am Spannarm (21) angebrachte Spannrolle (22) des Riementriebes (17) und die Steuerkurve (33) zur Überführung der Messerbaugruppe (27) der Schneideinrichtung (15) aus der Schneidendstellung in die Schneidausgangsstellung und zurück um eine gemeinsame Schwenkachse schwenkbar gelagert sind.

5. Rundballenpresse nach Anspruch 4, dadurch gekennzeichnet, daß die am Spannarm (21) angebrachte Spannrolle (22) des Riementriebes (17) und die Steuerkurve (33) zur Überführung der Messerbaugruppe (27) der Schneideinrichtung (15) aus der Schneidendstellung in die Schneidausgangsstellung und zurück um eine Mittelachse (24) einer Abzugswalze (25) der Abzugs- und Zuführvorrichtung (12) schwenkbar gelagert sind.

6. Rundballenpresse nach einem der Ansprüche 1 bis 5, dadurch gekennzeichnet, daß die Steuerkurve (33) einen kurvenförmigen Steg (34) mit einem auf einem Teil der Außenkontur des Steges (34) angebrachten Abdeckelement (35) aufweist.

7. Rundballenpresse nach einem der Ansprüche 1 bis 6, dadurch gekennzeichnet, daß das Abdeckelement (35) der Steuerkurve (33) einenends schräg zugeschnitten ist.

8. Rundballenpresse nach einem der Ansprüche 1 bis 7, dadurch gekennzeichnet, daß der Spannarm (21) zur Aufnahme der Spannrolle (22) des Riementriebes (17) fest mit der Steuerkurve (33) verbunden ist.

9. Rundballenpresse nach einem der Ansprüche 1 bis 8, dadurch gekennzeichnet, daß die Verbindung zwischen einer Riemenscheibe (19) des Riementriebes (17) und der Abzugswalze (25) der Abzugs- und Zuführvorrichtung (12) eine Freilaufkupplung beinhaltet.

10. Rundballenpresse nach einem der Ansprüche 1 bis 9, dadurch gekennzeichnet, daß bei dem Stellglied (23) zur Überführung der Spannrolle (22) aus der Ausgangslage in die den Riemen (20) des Riementriebes (17) spannende Lage und zurück in die Ausgangslage lediglich eine ganz eingefahrene bzw. eine ganze ausgefahrene Schaltposition vorgesehen ist.

11. Rundballenpresse nach einem der Ansprüche 1 bis 10, dadurch gekennzeichnet, daß das Stellglied (23) einenends einen Federspeicher (39) aufweist.

12. Rundballenpresse nach einem der Ansprüche 1 bis 11, dadurch gekennzeichnet, daß das Stellglied (23) elektrisch ansteuerbar ist.

13. Rundballenpresse nach einem der Ansprüche 1 bis 12, dadurch gekennzeichnet, daß das Stellglied (23) ein elektrischer Linearantriebsmotor (38) ist.

14. Rundballenpresse nach einem der Ansprüche 1 bis 13, dadurch gekennzeichnet, daß Erkennungsmittel (40) zur Feststellung des jeweiligen Umhüllungsgrades des Ballens der Abzugswalze (25) der Abzugs- und Zuführvorrichtung (12) zugeordnet sind.

15. Rundballenpresse nach einem der Ansprüche 1 bis 14, dadurch gekennzeichnet, daß als Erkennungsmittel (40) eine Signalscheibe (41) mit am Umfang gleichmäßig verteilten Aussparungen vorgesehen ist, welcher ein Zählelement (42) zugeordnet ist.

16. Rundballenpresse nach einem der Ansprüche 1 bis 15, dadurch gekennzeichnet, daß die vom Zählelement (42) aufgenommenen Zählimpulse einer Bedien- und Steuerungseinheit zuführbar sind.

## Claims

1. A round baling press having winding elements bounding the periphery of the winding space and leaving an aperture for the feeding of materials and with a pull-off and feed apparatus (12) with, associated with these latter, a cutting means (15) for pulling off a covering web (13) of specific length from a material roll (14) and for feeding the covering web (13) into the winding space of the round baling press for the peripheral wrapping of a finished bale with a driving and switching arrangement for the selective driving of the pull-off and feed means (12), the driving and switching arrangement comprising a belt transmission which can be switched on and off by means of a tensioning pulley (22) and which is so constructed that in synchronism with the belt transmission (17) being switched on, there is a transfer of the cutting means (15) out of the cutting finishing position which constitutes the inoperative position into a cutting starting position and, by the belt transmission (17) being switched off, a transfer of the cutting means (15) out of the cutting starting position into the cutting finishing position is reached and whereby, by means of a positioning member (23), the tensioning pulley (22) of the belt transmission (17) is moved out of a starting position into a position in which the belt (20) of the belt transmission (17) is tensioned, a cutting blade assembly (27) of the cutting means (15) being capable of being transferred by a guiding and controlling element (29) which is guided on a cam (33) to move out of the cutting finishing position which constitutes the inoperative position into a cutting starting position in which it is not engaged with a passing portion of the covering web (13) and stopped and in that after the bale has been wrapped to a degree which is chosen and established by acknowledging means (40), the tensioning pulley (22) is moved back out of the position in which it tensions the belt (20) of the belt transmission (17) into the starting position and consequently couples the cutting blade assembly (27) with the cutting means (15) abruptly by the guiding and controlling elements (29) being thrown off the cam (33) by virtue of, disposed obliquely to the running and guiding surface (37) of the cam (33), a throw-off edge (36) out of the cutting starting position into the cutting finishing position.

2. A round baling press according to claim 1, characterised in that the guiding and controlling element (29) is constructed as a sensing arm (30) connected to the cutting blade assembly (27) of the cutting means (15) and on the free end of which there may be a freely running pulley (32) or a sliding member.

3. A round baling press according to claim 1 and 2, characterised in that the sensing arm (30) is constructed as a leaf spring (31) adapted to be flexible in relation to its transverse orientation.

4. A round baling press according to one of claims 1 to 3, characterised in that the tensioning pulley (22) of the belt transmission (17) and which is mounted on the tensioning arm (21) and the cam (33) for transferring the cutter blade assembly (27) of the cutting means (15) out of the cutting finishing position into the cutting starting position and back are mounted to pivot about the common pivot axis.

5. A round baling press according to claim 4, characterised in that the tensioning pulley (22) of the belt transmission (17) which is mounted on the tensioning arm (21) and the cam (33) for transferring the cutting blade assembly (27) of the cutting means (15) out of the cutting finishing position into the cutting starting position and back are mounted to be pivotable about a central axis (24) of a pull-off roller (25) of the pull-off and feeding means (12).

6. A round baling press according to one of claims 1 to 5, characterised in that the cam (33) comprises a curvilinear web (34) with a covering element (35) mounted on a part of the outer contour of the web (34).

7. A round baling press according to one of claims 1 to 6, characterised in that the covering element (35) of the cam (33) is cut obliquely at one end.

8. A round baling press according to one of claims 1 to 7, characterised in that the tensioning arm (21) for accommodating the tensioning pulley (22) of the belt transmission (17) is rigidly connected to the cam (33).

9. A round baling press according to one of claims 1 to 8, characterised in that the connection between a belt pulley (19) of the belt transmission (17) and the pull-off roller (25) of the pull-off and feeding means (12) comprises a freewheel coupling.

10. A round baling press according to one of claims 1 to 9, characterised in that in the case of the positioning member (23) for transferring the tensioning pulley (22) from the starting position into the position in which the belt (20) of the belt transmission (17) is tensioned and back into the starting position is only a fully retracted or fully extended switched position.

11. A round baling press according to one of claims 1 to 10, characterised in that the positioning member (23) has a spring storage means (39) at one end.

12. A round baling press according to one of claims 1 to 11, characterised in that the positioning member (23) can be electrically operated.

13. A round baling press according to one of claims 1 to 12, characterised in that the positioning member (23) is an electrical linear drive motor (33).

14. A round baling press according to one of claims 1 to 13, characterised in that recognition means (40) for establishing the particular degree of wrapping of the bale are associated with the pull-off roller (25) of the pulling-off and feeding means (12).

15. A round baling press according to one of claims 1 to 14, characterised in that the recognition means (14) provided is a signal disc (41) with cut-outs distributed evenly over its periphery and with which a counting element (42) is associated.

16. A round baling press according to one of claims 1 to 15, characterised in that the counting pulses registered by the counting element (42) are adapted to be fed to an operating and control unit.

## Revendications

1. Presse à balles rondes comportant une chambre d'enroulement laissant une ouverture d'entrée de la matière avec des éléments d'enroulement qui délimitent la périphérie de la chambre et un dispositif de dévidage et d'alimentation (12) comprenant une installation de coupe (15) pour dévider une bande enveloppe (13) de longueur déterminée à partir d'un rouleau de bande (14) et pour fournir la bande enveloppe (13) à la chambre d'enroulement de la presse, pour envelopper la périphérie d'une balle terminée,
un dispositif d'entraînement et de commutation pour entraîner sélectivement le dispositif de dévidage et d'alimentation (12),
le dispositif d'entraînement et de commutation comprenant un entraînement à courroies (17) qui peut être embrayé ou débrayé à l'aide d'un rouleau tendeur (22) et qui est réalisé pour qu'en synchronisme avec l'embrayage de la transmission à courroies (17), l'installation de coupe (15) passe d'une position de fin de coupe correspondant à la position de repos, à une position de sortie de coupe, et que le débrayage de l'entraînement à courroies (17) fasse passer l'installation de coupe (15) de sa position de sortie de coupe à sa position de fin de coupe et à l'aide d'un organe de réglage (23) qui fait passer le rouleau tendeur (22) de l'entraînement à courroies (17), d'une position de repos à une position de tension des courroies (20) de l'entraînement (17), pour ainsi faire passer un groupe de couteaux (27) de l'installation de coupe (15), par l'intermédiaire d'un élément de guidage et de commande (29) guidé par une courbe de commande (33), de la position de fin de coupe constituant la position de repos, à une position de sortie de coupe, non en prise avec la bande de défilement de la bande enveloppe (13), et peut être bloqué et, après un degré d'enveloppement de la balle constaté de manière quelconque et par un moyen de détection (40), on fait passer le rouleau tendeur (22) de la position de tension des courroies (20) de l'entraînement à courroie (17), en retour dans la position de sortie et ainsi les groupes de couteaux (27), couplés, de l'installation de coupe (15), brusquement après l'éjection de l'élément de guidage et de commande (29) de la courbe de commande (33), du fait d'une surface de circulation et de guidage (37), en biais, de l'arête d'éjection (36) prévue sur la courbe de commande (33) pour passer de la position de sortie de coupe à la position de fin de coupe.

2. Presse à balles rondes selon la revendication 1,
caractérisée en ce que
l'élément de guidage et de commande (29) est un bras de détection (30) relié au groupe de couteaux (27) de l'installation de coupe (15), et dont l'extrémité libre porte un galet de roulement (32) ou un patin.

3. Presse à balles rondes selon l'une quelconque des revendications 1 ou 2,
caractérisée en ce que
le bras de détection (30) est réalisé sous la forme d'une lamelle élastique (31), souple par rapport à son alignement transversal.

4. Presse à balles rondes selon l'une quelconque des revendications 1 à 3,
caractérisée en ce que
le galet tendeur (22) de l'entraînement à courroies (17), prévu sur le bras de tension (21), et la courbe de commande (33) pour faire passer le groupe de couteaux (27) de l'installation de coupe (15) de sa position de coupe à sa position de repos et inversement, sont montés pivotants autour d'un axe de pivotement commun.

5. Presse à balles rondes selon la revendication 4,
caractérisée en ce que
le rouleau tendeur (22) de l'entraînement à courroies (17) équipant le bras tendeur (21) et la courbe de commande (33) sont montés pivotants pour faire passer le groupe de couteaux (27) de l'installation de coupe (15), de sa position de fin de coupe dans sa position de sortie de coupe et en retour, autour d'un axe central (24) d'un tambour de dévidage (25) du dispositif de dévidage et d'alimentation (12).

6. Presse à balles rondes selon l'une quelconque des revendications 1 à 5,
caractérisée en ce que
la courbe de commande (33) comporte une nervure (34) en forme de courbe avec un élément de recouvrement (35) prévu sur une partie du contour extérieur de la nervure (34).

7. Presse à balles rondes selon l'une quelconque des revendications 1 à 6,
caractérisée en ce que
l'élément de recouvrement (35) de la courbe de commande (33) est coupé en biais à une extrémité.

8. Presse à balles rondes selon l'une quelconque des revendications 1 à 7,
caractérisée en ce que
le bras tendeur (21) est relié solidairement à la courbe de commande (33) pour recevoir le galet tendeur (22) de l'entraînement à courroie (17).

9. Presse à balles rondes selon l'une quelconque des revendications 1 à 8,
caractérisée en ce qu'
un embrayage à roue libre est constitué par la liaison entre une poulie (19) de l'entraînement à courroie (17) et le tambour de dévidage (25) du dispositif de dévidage et d'alimentation (12).

10. Presse à balles rondes selon l'une quelconque des revendications 1 à 9,
caractérisée en ce que
pour l'organe d'actionnement (23), pour faire passer le rouleau tendeur (22) de sa position de repos à la position de mise en tension des courroies (20) de l'entraînement à courroies (17) et, en retour, dans sa position de repos, il est prévu uniquement une position de commutation complètement rentrée ou complètement sortie.

11. Presse à balles rondes selon l'une quelconque des revendications 1 à 10,
caractérisée en ce que
l'organe d'actionnement (23) comporte, à une extrémité, un accumulateur à ressort (39).

12. Presse à balles rondes selon l'une quelconque des revendications 1 à 11,
caractérisée en ce que
l'organe d'actionnement (23) se commande électriquement.

13. Presse à balles rondes selon l'une quelconque des revendications 1 à 12,
caractérisée en ce que
l'organe d'actionnement (23) est un moteur électrique linéaire (38).

14. Presse à balles rondes selon l'une quelconque des revendications 1 à 13,
caractérisée en ce que
le moyen de détection (40) pour détecter le degré d'enveloppement respectif de la balle est associé au tambour de dévidage (25) de l'installation de dévidage et d'alimentation (12).

15. Presse à balles rondes selon l'une quelconque des revendications 1 à 14,
caractérisée en ce que
le moyen de détection (40) est un disque phonique (41) ayant à sa périphérie des découpes réparties régulièrement pour être détectées par un élément de comptage (42).

16. Presse à balles rondes selon l'une quelconque des revendications 1 à 15,
caractérisée en ce que
les impulsions de comptage fournies par l'élément de comptage (42) sont appliquées à une unité de manoeuvre et de commande.
